(19) Europäisches Patentamt
European Patent Office
Office européen des brevets

(11) **EP 1 770 434 B1**

(12) **EUROPEAN PATENT SPECIFICATION**

(45) Date of publication and mention
of the grant of the patent:
**28.10.2009 Bulletin 2009/44**

(51) Int Cl.:
*G02F 1/1339* (2006.01)   *G02F 1/1341* (2006.01)
*G02F 1/167* (2006.01)   *G02F 1/1333* (2006.01)

(21) Application number: **06254994.4**

(22) Date of filing: **27.09.2006**

(54) **Information display panel and method of manufacturing the same**

Anzeigetafel und deren Herstellungsverfahren

Dispositif d'affichage et sa procédé de fabrication

(84) Designated Contracting States:
**DE FR**

(30) Priority: **28.09.2005 JP 2005281910**
**22.09.2006 JP 2006257201**

(43) Date of publication of application:
**04.04.2007 Bulletin 2007/14**

(73) Proprietor: **Bridgestone Corporation**
**Tokyo 104-8340 (JP)**

(72) Inventors:
• **Shoji, Takanori**
**Kodaira-shi**
**Tokyo 187-8531 (JP)**

• **Kita, Shinichi**
**Kodaira-shi**
**Tokyo 187-8531 (JP)**

(74) Representative: **Whalley, Kevin**
**Marks & Clerk LLP**
**90 Long Acre**
**London WC2E 9RA (GB)**

(56) References cited:
**US-A1- 2003 117 570   US-A1- 2004 184 137**
**US-A1- 2005 062 925**

**Description**

The present invention relates to an information display panel, in which display media are sealed between two opposed substrates, at least one substrate being transparent, and, in which the display media, to which an electrostatic field is applied, are made to move so as to display information such as an image, and a method of manufacturing the same.

As an information display device substitutable for liquid crystal display (LCD), information display devices with the use of technology such as an electrophoresis method, an electro-chromic method, a thermal method, and a dichroic-particles-rotary method are proposed.

These information display devices, are conceivable as inexpensive visual display devices of the next generation from a merit of having wide field of vision close to normal printed matter, having smaller consumption with LCD, or having a memory function, and application to a display for portable devices and electronic paper is expected. Recently, an electrophoresis method is proposed wherein microencapsulate dispersion liquid is made up with dispersion particles and coloration solution and the liquid is disposed between faced substrates.

However, in the electrophoresis method, there is a problem that a response rate is slow by reason of viscosity resistance because the particles migrate among the electrophoresis solution. Further, there is a problem of lacking imaging repetition stability, because particles with high specific gravity of titanium oxide are scattered within a solution of low specific gravity, and it is difficult to maintain a stability of dispersion state. Even in the case of microencapsulating, cell size is diminished to a microcapsule level in order to make it hard to appear, however, an essential problem was not overcome at all.

Besides the electrophoresis method using behavior in the solution, recently, a method wherein electro-conductive particles and a charge transport layer are installed in a part of the substrate without using solution is proposed. [The Imaging Society of Japan "Japan Hardcopy '99" (July 21-23, 1999) Transaction Pages 249-252] However, the structure becomes complicated because the charge transport layer and further a charge generation layer are to be arranged. In addition, it is difficult to constantly dissipate charges from the electro-conductive particles, and thus there is a drawback of lack of stability.

As one method for overcoming the various problems mentioned above, an information display panel is known, in which at least one or more groups of display media having optical reflectance and charge characteristic, which are constituted by at least one or more groups of particles, are sealed between two opposed substrates, at least one substrate being transparent, and in which the display media, to which an electrostatic field is applied, are made to move so as to display information such as an image.

In the information display panel having the construction mentioned above, generally, there is a sealing agent forming portion for sealing a space between the substrates by arranging a sealing agent at a most peripheral portion between the two substrates by pressure, the substrate is not bent in the information display region since the partition walls are formed, but the substrate is bent in the sealing agent forming portion and thus the gap between the substrates is not even sometimes. In order to solve the problems mentioned above, a gap maintaining member is arranged between the information display region (partition wall forming portion) and the sealing agent forming portion.

On the other hand, in the information display panel having the construction mentioned above, it is necessary to perform a step of filling the display media in a cell formed on one substrate between the partition walls. In this case, if the gap maintaining member has a wide rib, an amount of the display media on the wide rib of the gap maintaining member becomes larger, as is the same as a tip portion of the partition wall. Therefore, there is a problem such that the display media sometimes remain on the wide rib if a display media removing condition (number of times and so on) must be set severely. Moreover, it the substrates are stacked under such a condition that the display media remain on the gap maintaining member, the gap between the substrates can not become even, and thus the information display panel having poor parallelism of the two substrates is formed. As a result, problems such as an outer shape defect and a driving characteristic fault occur.

Attention is also drawn to the disclosure of US 2004/0184137A, which discloses the features of the preamble of claim 1.

An object of the invention is to eliminate the drawbacks mentioned above and to provide an information display panel and a method of manufacturing the same, which can easily remove the display media remaining on the gap maintaining member, and which can obtain a panel having an excellent parallelism by evenly pressing the substrates during the substrate stacking operation.

The invention provides an information display panel, in which display media are sealed between two opposed substrates, at least one substrate being transparent, and in which the display media, to which an electrostatic field is applied, are made to move so as to display information such as an image, comprising: a gap maintaining member formed by arranging plural patterns each having a small area between an information display region of the panel and a sealing agent forming portion arranged at a peripheral portion of the panel.

The gap maintaining member is preferably formed by connecting all of or a part of the plural patterns each having a small area.

Moreover, as preferred embodiments of the information display panel according to the invention: the patterns of the gap maintaining member are integrated with partition wall patterns in the information display region; the patterns each having a small area, which constitute the gap maintaining member, are formed by line-shaped patterns, and the plural line-shaped patterns are aligned in the same direction to form the gap maintaining member; a space width between lines of the line-shaped patterns is wider than a particle diameter of the display media; a line width of the line-shaped patterns is 5 - 100 $\mu$m; and a line width of the line-shaped patterns is equal to a space between adjacent line-shaped patterns.

Further, according to the invention, a method of manufacturing the information display panel mentioned above comprises such a step that the gap maintaining member is formed by using the same material as that of the partition walls in the information display region of the panel and by forming simultaneously according to the same process as that of partition walls in the information display region of the panel.

According to the invention, since a gap maintaining member is formed by arranging plural patterns each having a small area between an information display region of the panel and a sealing agent forming portion arranged at a peripheral portion of the panel, it is possible to obtain an information display panel and a method of manufacturing the same, which can easily remove the display media remaining on the gap maintaining member, and, which can obtain a panel having an excellent parallelism by evenly pressing the substrates during the substrate stacking operation.

The invention will be further described with reference to the accompanying drawings, wherein

Figs. 1a and 1b are schematic views respectively showing one embodiment of the information display panel according to the invention;

Figs. 2a and 2b are schematic views respectively illustrating another embodiment of the information display panel according to the invention;

Figs. 3a and 2b are schematic views respectively depicting still another embodiment of the information display panel according to the invention;

Figs. 4a - 4d are schematic views respectively showing still another embodiment of the information display panel according to the invention.

Figs. 5a and 4b are schematic views respectively illustrating still another embodiment of the information display panel according to the invention.

Fig. 6 is a schematic view depicting still another embodiment of the information display panel according to the invention.

Fig. 7 is a schematic view showing still another embodiment of the information display panel according to the invention.

Fig. 8 is a schematic view illustrating one construction of the information display panel according to the invention;

Fig. 9 is a schematic view depicting one preferred embodiment of the line-shaped patterns shown in Fig. 8;

Figs. 10a - 10h are schematic views respectively explaining one embodiment of the patterns each having a small area used in the information display panel according to the invention.

Figs. 11a and 11b are schematic views respectively explaining another embodiment of the patterns each having a small area used in the information display panel according to the invention.

Fig. 12 is a schematic view showing one embodiment of a shape of the partition walls in the information display panel according to the invention.

First, a basic construction of an information display panel used for an information display device utilizing particles including white color particles according to the invention will be explained. In the information display panel used in the present invention, an electrostatic field is applied to the particles sealed between two opposed substrates. Charged particles are attracted along a direction of electrostatic field to be applied by means of Coulomb's force in such a manner that the particles charged at a low potential are attracted toward a high potential side and the particles charged at a high potential are attracted toward a low potential side, and thus the particles can be moved reciprocally by varying a direction of electrostatic field due to a switching operation of potential. Accordingly, an image can be displayed. Therefore, it is necessary to design the information display panel in such a manner that the display media can move evenly and maintain stability during a reciprocal operation or during a reserving state. Here, in the case of using particles or liquid powders as the display media, as to forces applied to the particles, there are an attraction force between the particles due to Coulomb' force, an imaging force with respect to the electrode panel, an intermolecular force, a liquid bonding force and gravity.

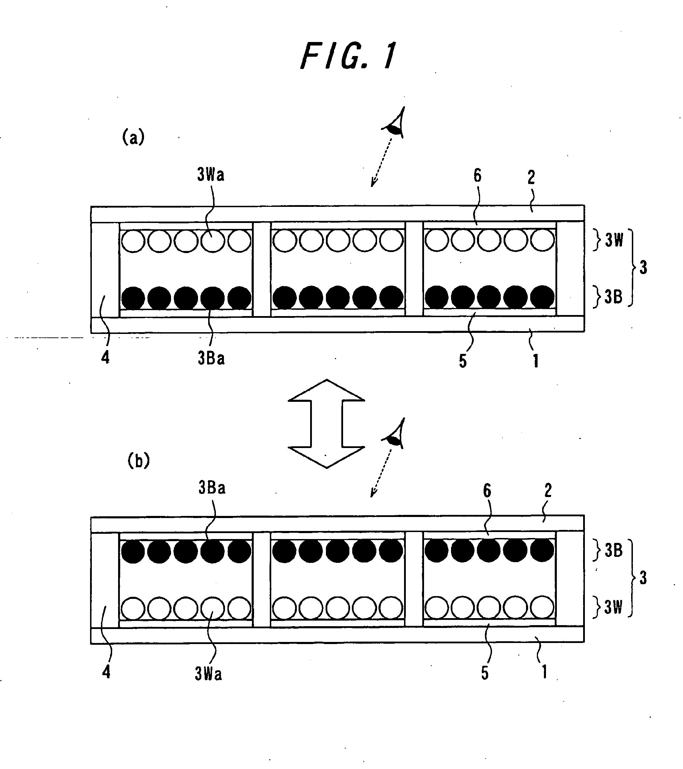

Examples of the information display panel according to the invention will be explained with reference to Figs. 1a and 1b - Fig. 7.

In the examples shown in Figs. 1a and 1b, at least two or more groups of display media 3 having different optical reflectance and charge characteristics and consisting of at least one or more groups of particles (here, white color display media 3W made of particles constituted by particles 3Wa for white color display media and black color display media 3B made of particles constituted by particles 3Ba for black color display media are shown) are moved in a perpendicular direction with respect to substrates 1 and 2, in accordance with an electric field generated by applying a voltage between an electrode 5 (individual electrode) arranged to the substrate 1 and an electrode 6 (individual electrode) arranged to the substrate 2. Then, as shown in Fig. 1a, a white color display is performed by viewing the white color display media 3W to the observer, or, as shown in Fig. 1b, a black color display is performed by viewing the black color display media 3B to an observer. Moreover, in Figs. 1a and 1b, the partition walls arranged at the near side are omitted.

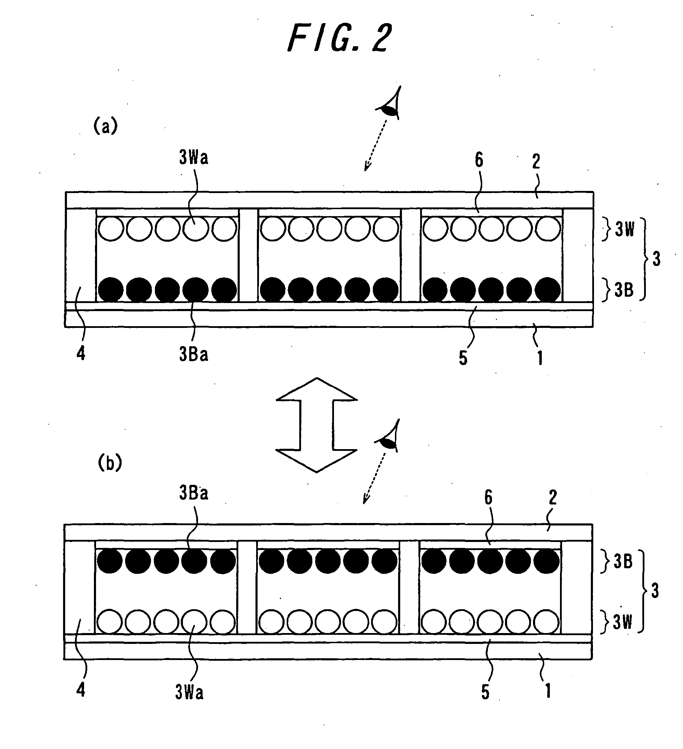

In the examples shown in Figs. 2a and 2b, at least two or more groups of display media 3 having different optical reflectance and charge characteristics and consisting of at least one or more groups of particles (here, white color display media 3W made of particles constituted by particles 3Wa for white color display media and black color display media 3B made of particles constituted by particles 3Ba for black color display media are shown) are moved in a perpendicular direction with respect to substrates 1 and 2, in accordance with an electric field generated by applying a voltage between an electrode 5 (line electrode) arranged to the substrate 1 and an electrode 6 (line electrode) arranged to the substrate 2. Then, as shown in Fig. 2a, a white color display is performed by viewing the white color display media 3W to the observer, or, as shown in Fig. 2b, a black color display is performed by viewing the black color display media 3B to an observer. Moreover, in Figs. 2a and 2b, the partition walls arranged at the near side are omitted.

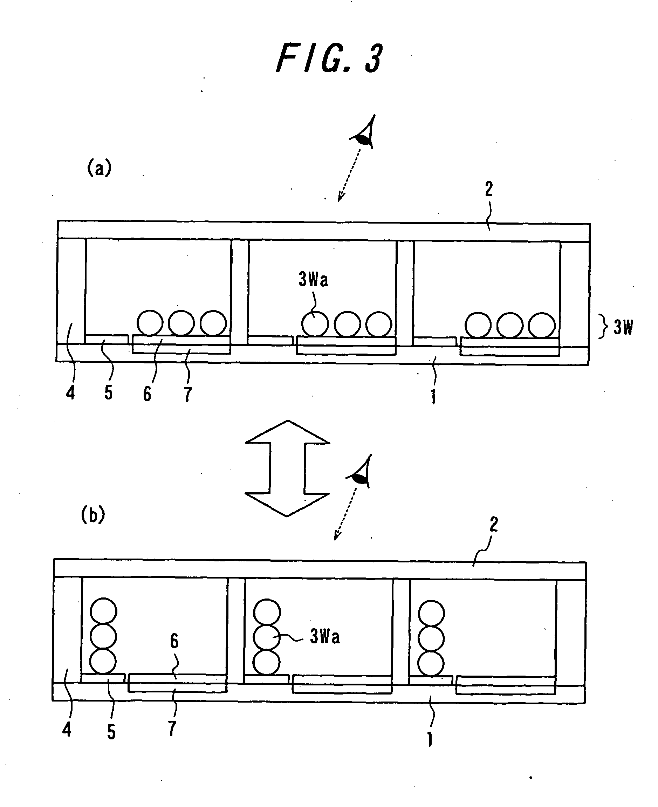

In the examples shown in Figs. 3a and 3b, at least one group of display media 3 having different optical reflectance and charge characteristics and consisting of at least one or more groups of particles (here, white color display media 3W made of particles constituted by particles 3Wa for white color display media) are moved in a parallel direction with respect to substrates 1 and 2, in accordance with an electric field generated by applying a voltage between the electrode 5 and the electrode 6 arranged to the substrate 1. Then, as shown in Fig. 3a, a white color display is performed by viewing the white color display media 3W to the observer, or, as shown in Fig. 3b, a black color display is performed by viewing the black color display media 3B to an observer. Moreover, in Figs. 3a and 3b, the partition walls arranged at the near side are omitted.

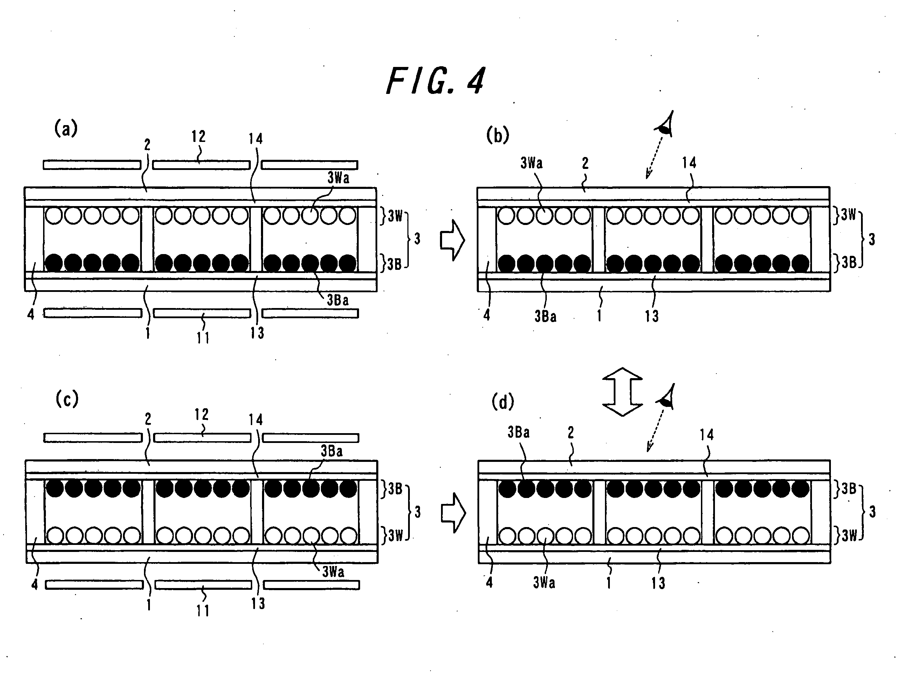

In the examples shown in Figs. 4a - 4d, firstly as shown in Figs. 4a and 4c, at least two or more groups of display media 3 having different optical reflectance and charge characteristics and consisting of at least one or more groups of particles (here, white color display media 3W made of particles constituted by particles 3Wa for white color display media and black color display media 3B made of particles constituted by particles 3Ba for black color display media are shown) are moved in respective cells formed by the partition walls 4 in a perpendicular direction with respect to substrates 1 and 2, in accordance with an electric field generated by applying a voltage between an outside electric field generating means 11 arranged outside of the substrate 1 and an outside electric field generating means 12 arranged outside of the substrate 2. Then, as shown in Fig. 4b, a white color display is performed by viewing the white color display media 3W to the observer, or, as shown in Fig. 4d, a black color display is performed by viewing to the observer, or, as shown in Fig. 4d, a black color display is performed by viewing the black color display media 3B to an observer. Moreover, in Figs. 4a - 4b, the partition walls arranged at the near side are omitted. Further, a conductive member 13 is arranged inside of the substrate 1, and a conductive member 14 is arranged inside of the substrate 2.

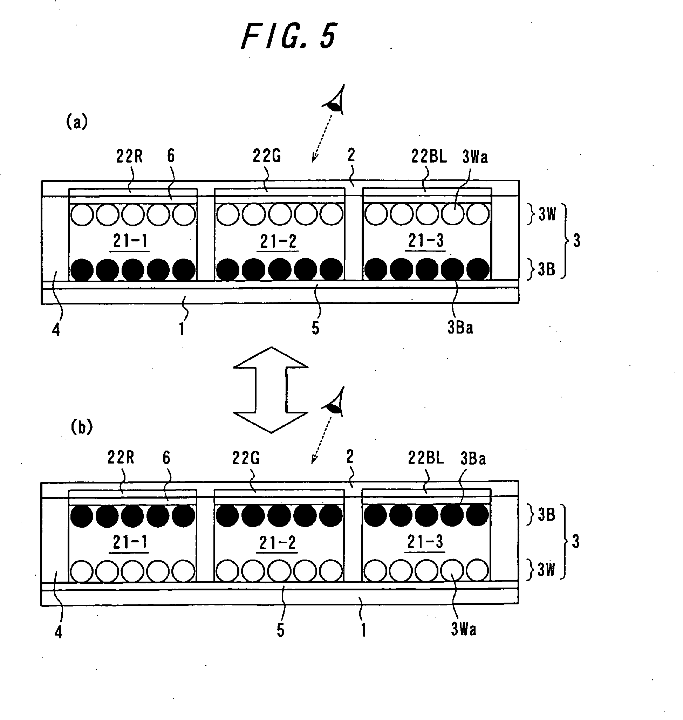

In the examples shown in Figs. 5a and 5b, a color display utilizing a unit pixel constituted by three cells is explained. In the examples shown in Figs. 5a and 5b: the white color display media 3W and the black color display media 3B are filled in all cells 21-1 to 21-3 as the display media; a red color filter 22R is arranged to the first cell 21-1 at the observer's side; a green filter 22G is arranged to the second cell 21-2 at the observer's side; and a blue color filter 22BL is arranged to the third cell 21-3 at the observer's side, so that the unit pixel is constructed by the first cell 21-1, the second cell 21-2 and the third cell 21-3. In this embodiment, as shown in Fig. 5a, a white color display is performed for the observer by arranging the white color display media 3W to all the first cell 21-1 to the third cell 21-3 at the observer's side, or, as shown in Fig. 5b, a black color display is performed for the observer by arranging the black color display media 3B to all the first cell 21-1 to the third cell 21-3 at the observer's side. Moreover, in Figs. 5a and 5b, the partition walls arranged at the near side are omitted.

The above explanations can be applied to a case such that the white color display media 3W made of the particles are substituted by white color display media made of liquid powders or a case such that the black color display media 3B made of the particles are substituted by black color display media made of liquid powders.

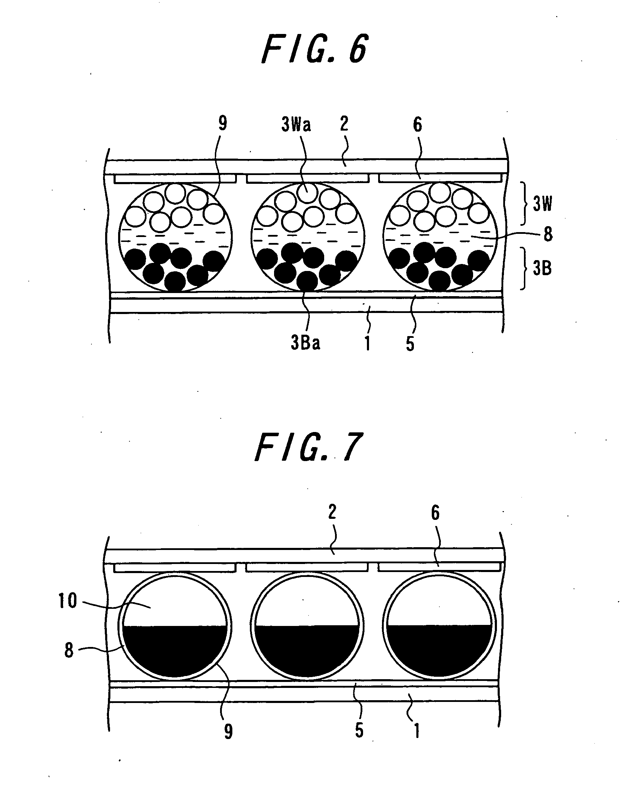

In the examples shown in Fig. 6 and Fig. 7, another embodiment, wherein the white/black color display is performed by utilizing the line electrodes 5 and 6 as is the same as the embodiment shown in Figs. 2a and 2b, is explained. In the example shown in Fig. 6, use is made of a micro capsule 9, in which the white color display media 3W and the black color display media 3B are filled together with an insulation liquid 8, instead of the cell formed by the partition walls 4, in which the white color display media 3W and the black color display media 3B are filled as shown in Figs. 2a and 2b. Moreover, in the example shown in Fig. 7, use is made of a micro capsule 9, in which a rotating ball 10 whose surface is divided into halves having different charge characteristics respectively, one half being a white color and the other half being a black color, is filled together with an insulation liquid 8, instead of the cell formed by the partition walls 4, in which the white color display media 3W and the black color display media 3B are filled as shown in Figs. 2a and 2b. In both examples shown in Fig. 6 and Fig. 7, the white/black color display can be performed, as is the same as the embodiment shown in Fig. 2b.

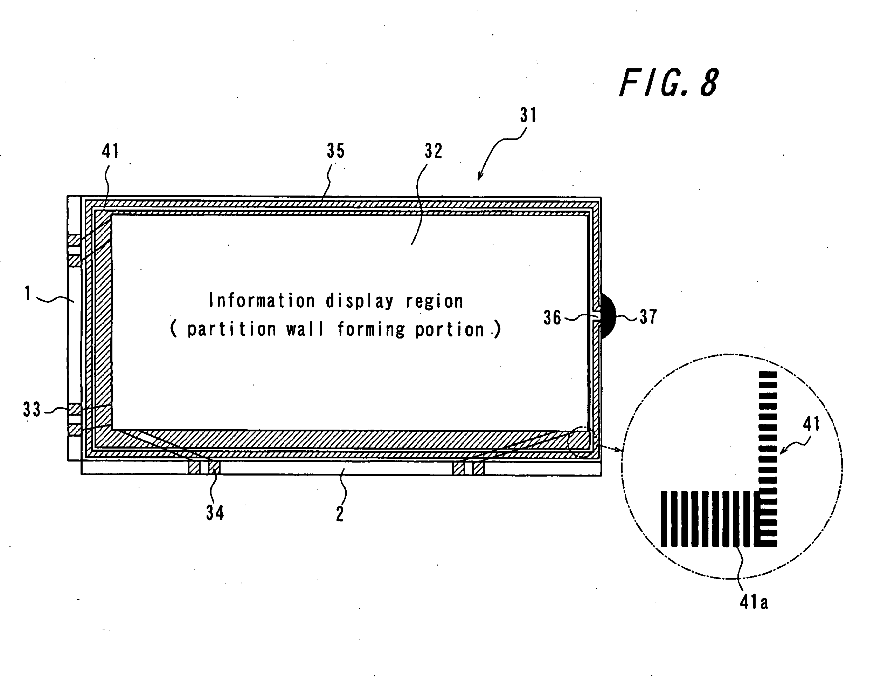

Fig. 8 is a schematic view showing one construction of the information display panel according to the invention. In an information display panel 31 shown in Fig. 8, the two substrates 1 and 2 are stacked by using adhesives to form an information display region 32 (partition wall forming portion). With respect to end portions of the substrates 1 and 2 in the information display region 32, input electrodes 33 and 34 for supplying power to the electrodes for applying an electrostatic field are respectively arranged. Moreover, with respect to a most peripheral portion between the two substrates 1 and 2 surrounding the information display region 32, a sealing agent forming portion 35 for sealing a space between the substrates 1 and 2 by means of a sealing agent is arranged. The sealing agent forming portion 35 has an opening portion 36, through which unnecessary gas and so on generated during a panel manufacturing process can be discharged outward. After the panel manufacturing process, the opening portion 36 is sealed by a sealing portion 37 so as to obtain the information display panel 31.

The feature of the information display panel 31 according to the invention is that a gap maintaining member 41 formed by arranging plural patterns each having a small area is arranged between the information display region 32 of the information display panel 31 and the sealing agent forming portion 35 arranged at a peripheral portion of the panel. In the embodiment shown in Fig. 8, as can be clearly seen from its partly enlarged view (circle portion in this figure), use is made of line-shaped patterns 41a as the patterns each having a small area, and the plural line-shaped patterns 41a are aligned in the same direction on each side. If the gap maintaining portion 41 is formed in this manner, the display media adhered to a portion of the gap maintaining portion 41, at which no line-shaped patterns 41a exist, are not to be cause of a gap disturbance between the substrates during a substrate stacking process, and thus it is not necessary to remove the display media mentioned above. Therefore, in this case, only the display media remaining on the line-shaped patterns 41a are to be removed, and thus the display media removing process can be made easier.

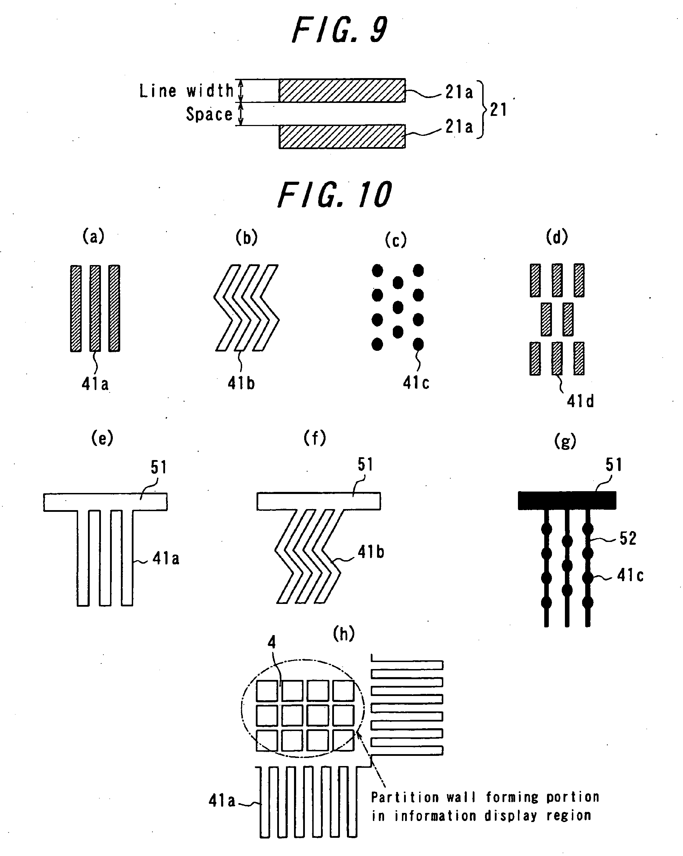

Fig. 9 is a schematic view illustrating one preferred embodiment of the line-shaped patterns depicted in Fig. 8. It is preferred that a space width between lines of the line-shaped patterns 41a shown in Fig. 9 is wider than a particle diameter of the display media. Moreover, it is preferred that a line width of the line-shaped patterns 41a is 5 - 100 $\mu$m. Further, it is preferred that a line width of the line-shaped patterns 41a is equal to a space between adjacent line-shaped patterns 41a. These relations can be suitably determined taking into consideration both of a role for maintaining the substrates as the gap maintaining member 41 and a role for dropping the display media into the space.

Figs. 10a - 10h are schematic views respectively explaining one embodiment of the patterns each having a small area used in the information display panel according to the invention. As the patterns each having a small area, there are various cases: such that the line-shaped patterns 41a are aligned in a longitudinal direction of the gap maintaining member 41, as shown in Fig. 10a; such that bend-shaped patterns 41b are aligned in a longitudinal direction of the gap maintaining portion 41, as shown in Fig. 10b; such that plural dot-shaped patterns 41c are arranged, as shown in Fig. 10c; and such that plural square-shaped patterns 41d are aligned in a longitudinal direction of the gap maintaining member 41, as shown in Fig. 10d. Moreover, there are other cases: such that the line-shaped patterns 41a are connected by a connection portion 51, as shown in Fig. 10e; such that the bend-shaped patterns 41b are connected by the connection portion 51, as shown in Fig. 10f; and such that the dot-shaped patterns 41c are connected by the connection portions 51 and connection portions 52, as shown in Fig. 10g. Further, there is still another case such that the partition walls 4 of the partition wall forming portion in the information display region are integrated with the line-shaped patterns 41a, as shown in Fig. 10h.

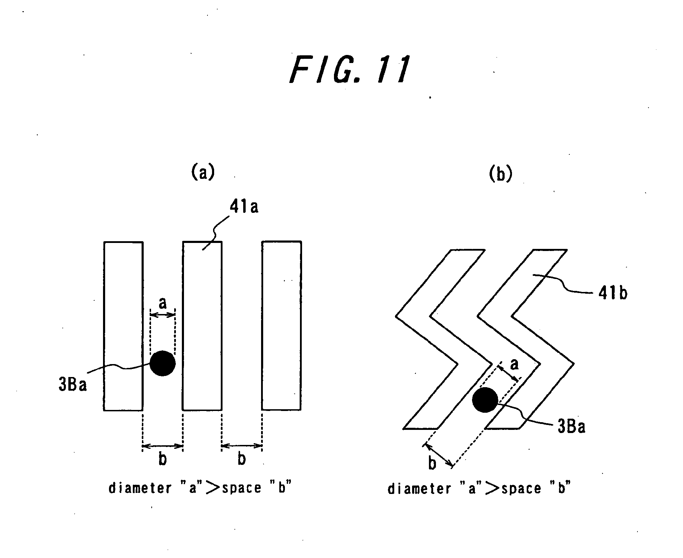

Figs. 11a and 11b are schematic views respectively explaining still another embodiment of the patterns each having a small area used in the information display panel according to the invention. In the embodiments shown in Figs. 11a and 11b, a relation between the space width of adjacent lines of the line-shaped patterns and the particle diameter of the display media is explained. As the patterns each having a small area, Fig. 11a shows an example such that the line-shaped patterns 41a are aligned in a longitudinal direction of the gap maintaining member 41 as is the same as the example shown in Fig. 10a, and Fig. 11b shows an example such that the bend-shaped patterns 41b are aligned in a longitudinal direction of the gap maintaining member 41 as is the same as the example shown in Fig. 10b.

Since the line shape of the example shown in Fig. 11a is a straight line shape, a space between the adjacent lines is always "b". In this case, in the case that a diameter of a particle 3Ba of the display media 3 is assumed to be "a", if a relation of a<b is satisfied, it is possible to easily drop the particle 3Ba of the display media 3 into the space. Therefore, an amount of the display media 3 remaining on the gap maintaining member 41 can be reduced. In this case, a cleaning process for eliminating the display media 3 remaining on the gap maintaining member 41 can be performed easily, and thus it is possible to achieve a gap maintaining stability during a substrate press process. On the other hand, since the line shape of the example shown in Fig. 11b is a polygonal line, a space width is varied according to a portion to be measured. The portion at which the space becomes minimum, is the portion, at which the adjacent lines are aligned in parallel as shown by "b" in Fig. 11b. If this value "b" satisfies a relation of a<b with respect to the particle diameter "a" of the display media 3, it is possible to easily drop the particle 3Ba of the display media 3 into the space as is the same as the case shown in Fig. 11a. As a result, it is possible to achieve a gap maintaining stability during a substrate press process.

It should be noted that only two examples are shown in Figs. 11a and 11b, but the same effects can be expected even in case such that use is made of other line shape patterns; and such that the patterns are integrated with the partition walls.

Next, a method of manufacturing the gap maintaining member 41 is explained. As a manufacturing method, use is made of a photolithography method, a die transfer method, a screen-printing method and a sandblast method. These methods can be preferably used for the information display panel according to the invention, but, among them, it is most preferred to use a photolithography method using a resist film. Moreover, a manufacturing process of the gap maintaining member 41 is usually performed separately with respect to the manufacturing process of the partition walls 4 in the information display region of the panel, but it is preferred to use the same materials and to perform these manufacturing processes simultaneously.

Hereinafter, respective members constituting the information display device according to the invention will be explained in detail.

As the substrate, at least one of the substrates is a transparent substrate 2 through which a color of the display media 3 can be observed from outside of the device, and it is preferred to use a material having a high transmission factor of visible light and an excellent heat resistance. The substrate 1 may be transparent or may be opaque. Examples of the substrate material include polymer sheets such as polyethylene terephthalate, polyether sulfone, polyethylene, polycarbonate, polyimide or acryl and metal sheets having flexibility and inorganic sheets such as glass, quartz or so on having no flexibility. The thickness of the substrate is preferably 2 to 5000 $\mu$m, more preferably 5 to 2000 $\mu$m. When the thickness is too thin, it becomes difficult to maintain strength and distance uniformity between the substrates, and when the thickness is thicker than 5000 $\mu$m, there is a drawback on the thin display panel.

As a material of the electrode arranged according to need, use is made of metals such as aluminium, silver, nickel, copper, gold, or conductive metal oxides such as indium tin oxide (ITO), antimony tin oxide (ATO), indium oxide, conductive tin oxide, conductive zinc oxide and so on, or conductive polymers such as polyaniline, polythiophene and so on, and they are used by being suitably selected. As an electrode forming method, use is made of a method in which the materials mentioned above are made to a thin film by means of sputtering method, vacuum vapor deposition method, CVD (chemical vapor deposition) method, coating method and so on, or a method in which conductive materials and solvents are mixed with synthetic resin binder and the mixture is sprayed. Transparency is necessary for the electrode arranged to the substrate at an observation side (display surface side), but it is not necessary for the substrate at a rear side. In both cases, the materials mentioned above, which are transparent and have a pattern formation capability, can be suitably used. Additionally, the thickness of the electrode may be suitable unless the electro-conductivity is absent or any hindrance exists in optical transparency, and it is preferably 3 to 1000 nm, more preferably 5 to 400 nm. The material and the thickness of the electrode arranged to the rear substrate are the same as those of the electrode arranged to the substrate at the display side, but transparency is not necessary. In this case, the applied outer voltage may be superimposed with a direct current or an alternate current.

As the partition wall 4 arranged according to need, a shape of the partition wall is suitably designed in accordance with a kind of the display media used for the display and is not restricted. However, it is preferred to set a width of the partition wall to be 2 - 100 $\mu$m more preferably 3 - 50 $\mu$m, and to set a height of the partition wall to be 10 - 100 $\mu$m, more preferably 10 - 50 $\mu$m.

Moreover, as a method of forming the partition wall, use may be made of a double rib method wherein ribs are formed on the opposed substrates respectively and they are connected with each other, and a single rib method wherein a rib is formed on one of the opposed substrates only. The present invention may be applied to both methods mentioned above.

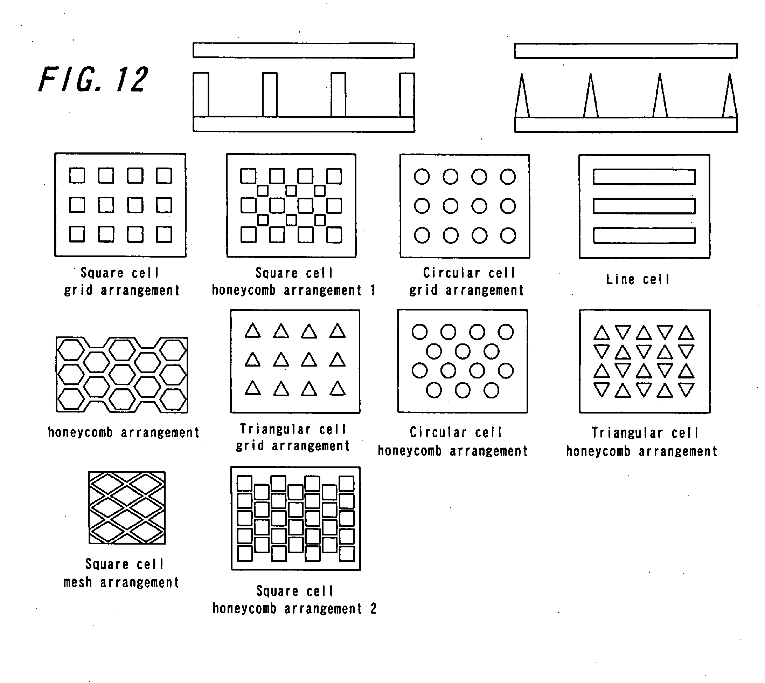

The cell formed by the partition walls each made of a rib has a square shape, a triangular shape, a line shape, a circular shape or a hexagon shape, and has an arrangement such as a grid, a honeycomb or a mesh, as shown in Fig. 12 viewed from a plane surface of the substrate. It is preferred that the portion corresponding to a cross section of the partition wall observed from the display side (an area of the frame portion of the display cell) should be made as small as possible. In this case, clearness of the image display can be improved.

The formation method of the partition wall is not particularly restricted, however, a die transfer method, a screen-printing method, a sandblast method, a photolithography method and an additive method are preferably used. Among them, it is further preferred to use a photolithography method using a resist film or a die transfer method.

Next, liquid powders including at least the white color particles according to the invention will be explained. It should be noted that a right of the name of liquid powders used in the information display panel according to the invention is granted to the applicant as "liquid powders" (Registered): register No. 4636931.

In the present invention, a term "liquid powders" means an intermediate material having both of liquid properties and particle properties and exhibiting a self-fluidity without utilizing gas force and liquid force. Preferably, it is a material having an excellent fluidity such that there is no repose angle defining a fluidity of powder. For example, a liquid crystal is defined as an intermediate phase between a liquid and a solid, and has a fluidity showing a liquid characteristic and an anisotropy (optical property) showing a solid characteristic (Heibonsha Ltd.: encyclopedia). On the other hand, a definition of the particle is a material having a finite mass if it is vanishingly small and receives an attraction of gravity (Maruzen Co., Ltd.: physics subject-book). Here, even in the particles, there are special states such as gas-solid fluidized body and liquid-solid fluidized body. If a gas is flown from a bottom plate to the particles, an upper force is acted with respect to the particles in response to a gas speed. In this case, the gas-solid fluidized body means a state that is easily fluidized when the upper force is balanced with gravity. In the same manner, the liquid-solid fluidized body means a state that is fluidized by a liquid (Heibonsha Ltd.: encyclopedia) In the present invention, it is found that the intermediate material having both of fluid properties and solid properties and exhibiting a self-fluidity without utilizing gas force and liquid force can be produced specifically, and this is defined as liquid powder.

That is, as is the same as the definition of the liquid crystal (intermediate phase between a liquid and a solid), the liquid powders according to the invention are a material showing the intermediate state having both of liquid properties and particle properties, which is extremely difficult to receive an influence of gravity showing the particle properties mentioned above and indicates a high fluidity. Such a material can be obtained in an aerosol state i.e. in a dispersion system wherein a solid-like or a liquid-like material is floating in a relatively stable manner as a dispersant in a gas, and thus, in the information display device according to the invention, a solid material is used as a dispersant.

The information display panel of the present invention has a construction such that the liquid powders composed of a solid material stably floating as a dispersoid in a gas and exhibiting a high fluidity in an aerosol state are sealed between two opposed substrates, wherein one of the two substrates is transparent. Such liquid powders have an excellent fluidity such that a repose angle as an index showing a fluidity of powders can not be measured, and can be made to move easily and stably by means of Coulomb's force and so on generated by applying a low voltage.

As mentioned above, the liquid powder means an intermediate material having both of liquid properties and particle properties and exhibiting a self-fluidity without utilizing gas force and liquid force. Such liquid powders become particularly an aerosol state. In the information display device according to the invention, the liquid powders are used in a state such that a solid material is relatively and stably floating as a dispersoid in a gas.

Next, the particles for the display media (hereinafter, called sometimes as particles) constituting the display media used in the information display panel according to the invention will be explained. The particles for the display media may be used as display media constituted by the particles only, or as display media constituted by mixing various groups of the particles, or as display media constituted by the liquid powders obtained by controlling and mixing the particles.

The particles may be composed of resins as a main ingredient, and can include according to need charge control agents, coloring agent, inorganic additives and so on as is known. Hereinafter, typical examples of resin, charge control agent, coloring agent, additive and so on will be explained.

Typical examples of the resin include urethane resin, urea resin, acrylic resin, polyester resin, acryl urethane resin, acryl urethane silicone resin, acryl urethane fluorocarbon polymers, acryl fluorocarbon polymers, silicone resin, acryl silicone resin, epoxy resin, polystyrene resin, styrene acrylic resin, polyolefin resin, butyral resin, vinylidene chloride resin, melamine resin, phenolic resin, fluorocarbon polymers, polycarbonate resin, polysulfon resin, polyether resin, and polyamide resin. Two kinds or more of these may be mixed and used. For the purpose of controlling the attaching force with the substrate, acryl urethane resin, acryl silicone resin, acryl fluorocarbon polymers, acryl urethane silicone resin, acryl urethane fluorocarbon polymers, fluorocarbon polymers, silicone resin are particularly preferable.

Examples of the electric charge control agent include, but are not particularly limited to, negative charge control agents such as salicylic acid metal complex, metal containing azo dye, oil-soluble dye of metal-containing (containing a metal ion or a metal atom), the fourth grade ammonium salt-based compound, calixarene compound, boron-containing compound (benzyl acid boron complex), and nitroimidazole derivative. Examples of the positive charge control agents include nigrosine dye, triphenylmethane compound, the fourth grade ammonium salt compound, polyamine resin, imidazole derivatives, etc. Additionally, metal oxides such as ultra-fine particles of silica, ultra-fine particles of titanium oxide, ultra-fine particles of alumina, and so on; nitrogen-containing circular compound such as pyridine, and so on, and their derivates or salts; and resins containing various organic pigments, fluorine, chlorine, nitrogen, etc. can be employed as the electric charge control agent.

As coloring agent, various kinds of organic or inorganic pigments or dye as will be described below are employable.

Examples of black pigments include carbon black, copper oxide, manganese dioxide, aniline black, and activate carbon.

Examples of blue pigments include C.I. pigment blue 15:3, C.I. pigment blue 15, Berlin blue, cobalt blue, alkali blue lake, Victoria blue lake, phthalocyanine blue, metal-free phthalocyanine blue, partially chlorinated phthalocyanine blue, first sky blue, and Indanthrene blue BC.

Examples of red pigments include red oxide, cadmium red, diachylon, mercury sulfide, cadmium, permanent red 4R, lithol red, pyrazolone red, watching red, calcium salt, lake red D, brilliant carmine 6B, eosin lake, rhodamine lake B, alizarin lake, brilliant carmine 3B, and C.I. pigment red 2.

By mixing the coloring agents mentioned above, the particles for the display media having a desired color can be manufactured.

Examples of yellow pigments include chrome yellow, zinc chromate, cadmium yellow, yellow iron oxide, mineral first yellow, nickel titanium yellow, navel orange yellow, naphthol yellow S, hanzayellow G, hanzayellow 10G, benzidine yellow G, benzidine yellow GR, quinoline yellow lake, permanent yellow NCG, tartrazinelake, and C.I. pigment yellow 12.

Examples of green pigments include chrome green, chromium oxide, pigment green B, C.I. pigment green 7,Malachite green lake, and final yellow green G.

Examples of orange pigments include red chrome yellow, molybdenum orange, permanent orange GTR, pyrazolone orange, Balkan orange, Indanthrene brilliant orange RK, benzidine orange G, Indanthrene brilliant orange GK, and C.I. pigment orange 31.

Examples of purple pigments include manganese purple, first violet B, and methyl violet lake.

Examples of white pigments include zinc white, titanium oxide, antimony white, and zinc sulphide.

Examples of extenders include baryta powder, barium carbonate, clay, silica, white carbon, talc, and alumina white. Furthermore, there are Nigrosine, Methylene Blue, rose bengal, quinoline yellow, and ultramarine blue as various dyes such as basic dye, acidic dye, dispersion dye, direct dye, etc.

Examples of inorganic additives include titanium oxide, zinc white, zinc sulphide, antimony oxide, calcium carbonate, pearl white, talc, silica, calcium silicate, alumina white, cadmium yellow, cadmium red, titanium yellow, Pressian blue, Armenian blue, cobalt blue, cobalt green, cobalt violet, ion oxide, carbon black, manganese ferrite black, cobalt ferrite black, copper powder, aluminium powder.

These coloring agents and inorganic additives may be used alone or in combination of two or more kinds thereof. Particularly, carbon black is preferable as the black coloring agent, and titanium oxide is preferable as the white coloring agent.

Moreover, as the average particle diameter d(0.5) of the particles for the display media (hereinafter, called sometimes as particles), it is preferred to set d(0.5) to 1 - 20 $\mu$m and to use even particles. If the average particle diameter d(0.5) exceeds this range, the image clearness sometimes deteriorates, and if the average particle diameter is smaller than this range, an agglutination force between the particles becomes larger and the movement of the particles is prevented.

Further, it is preferred that particle diameter distribution Span of the particles, which is defined by the following formula, is less than 5, more preferably less than 3:

$$\text{Span} = (d(0.9) - d(0.1))/d(0.5) \; ;$$

(here, d(0.5) means a value of the particle diameter expressed by $\mu$m wherein an amount of the particles having the particle diameter larger than or smaller than this value is 50%, d(0.1) means a value of the particle diameter expressed by $\mu$m wherein an amount of the particles having the particle diameter smaller than this value is 10%, and d(0.9) means a value of the particle diameter expressed by $\mu$m wherein an amount of the particles having the particle diameter smaller than this value is 90%).

If the particle diameter distribution Span of the particles is set to not more than 5, the particle diameter becomes even and it is possible to perform an even particle movement.

Furthermore, as a correlation between the particles, it is preferred to set a ratio of d(0.5) of the particles having smallest diameter with respect to d(0.5) of the particles having largest diameter to not more than 50, more preferably not more than 10. The particles having different charge characteristics with each other are moved reversely, even if the particle diameter distribution Span is made smaller. Therefore, it is preferred that the particle sizes of the particles are made to be even with respect to each other, and same amounts of the particles are easily moved in a reverse direction, and thus that is this range.

Here, the particle diameter distribution and the particle diameter mentioned above can be measured by means of a laser diffraction / scattering method. When a laser light is incident upon the particles to be measured, a light intensity distribution pattern due to a diffraction / scattering light occurs spatially. This light intensity distribution pattern corresponds to the particle diameter, and thus it is possible to measure the particle diameter and the particle diameter distribution.

In the present invention, it is defined that the particle diameter and the particle diameter distribution are obtained by a volume standard distribution. Specifically, the particle diameter and the particle diameter distribution can be measured by means of a measuring apparatus Mastersizer 2000 (Malvern Instruments Ltd.) wherein the particles setting in a nitrogen gas flow are calculated by an installed analysis software (which is based on a volume standard distribution due to Mie's theory).

A charge amount of the display media properly depends upon the measuring condition. However, it is understood that the charge amount of the display media used for the display media in the information display panel substantially depends upon an initial charge amount, a contact with respect to the partition wall, a contact with respect to the substrate, and a charge decay due to an elapsed time, and specifically a saturation value of the particles for the display media during a charge behavior is a main factor.

After various investigations of the inventors, it is found that an adequate range of the charged values of the particles for the display media can be estimated by performing a blow-off method utilizing the same carrier particles so as to measure the charge amount of the particles for the display media.

Further, in the case that the display media constituted by the particles for display media are applied to a dry-type information display panel in which the display media are moved in a gas, it is important to control a gas in a gap surrounding the display media between the substrates, and a suitable gas control contributes an improvement of display stability. Specifically, it is important to control a humidity of the gap gas to not more than 60% RH at 25°C, preferably not more than 50% RH.

The above gap means a gas portion surrounding the display media obtained by substituting the electrodes 5, 6 (in the case that the electrodes are arranged inside of the substrate), an occupied portion of the display media 3, an occupied portion of the partition walls 4 and a seal portion of the device from the space between the substrate 1 and the substrate 2 for example in Figs. 1a and 1b - Figs. 3a and 3b.

A kind of the gap gas is not limited if it has the humidity mentioned above, but it is preferred to use dry air, dry nitrogen gas, dry argon gas, dry helium gas, dry carbon dioxide gas, dry methane gas and so on. It is necessary to seal this gas in the device so as to maintain the humidity mentioned above. For example, it is important to perform the operations of filling the particles or the liquid powders and assembling the substrate under an atmosphere having a predetermined humidity and to apply a seal member and a seal method for preventing a humidity inclusion from outside of the device.

In the information display panel according to the invention, an interval between the substrates is not restricted if the particles or the liquid powders can be moved and a contrast can be maintained, and it is adjusted normally to 10 - 500 $\mu$m, preferably 10 - 200 $\mu$m.

Moreover, it is preferred to control a volume occupied rate of the particles or the liquid powders in a space between the opposed substrates to 5 - 70 vol %, more preferably 5 - 60 vol %. If the volume occupied rate of the particles or the liquid powders exceeds 70 vol %, the particles or the liquid powders become difficult to move, and if it is less than 5 vol %, a sufficient contrast cannot be obtained and a clear image display is not performed.

The image display panel according to the invention is applicable to image display units for mobile equipment such as notebook personal computers, electronic datebooks, portable information equipment called PDA (Personal Digital Assistants), cellular phones, handy terminals and so on; to electric paper for electric books, electric newspapers and so on; to bulletin boards such as signboards, posters, blackboards (whiteboards) and so on; to image display units for electric desk calculators, home electric application products, auto supplies and so on; to card display units for point cards, IC cards and so on; and to display units for electric advertisements, information boards, electric POP (Point of Presence, Point of Purchase advertising), electric price tags, electric bin tags, electric musical scores, RF-ID devices and so on. In addition, it is also preferably applied to image display units for various electronic equipment such as POS terminals, car navigation systems, clocks and so on. As another use, it is preferably applied to rewritable paper (information is rewritten by means of outer electric field generating means).

Moreover, various driving-types are applicable to the information display panel according to the invention such as: simple matrix driving-type and static driving-type, both having no switching element; active matrix driving-type such as three terminal switching element typically shown by thin film transistor (TFT) and two terminal switching element typically shown by thin film diode (TFD); and outer electric field driving-type utilizing an electric field.

## Claims

1. An information display panel (31), in which display particles (3) are sealed between two opposed substrates (1, 2), at least one substrate (2) being transparent, and in which the display particles, when an electrostatic field is applied, are made to move so as to display information such as an image, comprising: a gap maintaining member (41) and a sealing agent forming portion (35) arranged at a peripheral portion of the panel **characterised in that** the gap maintaining member (41) is formed by arranging plural patterns (41a-d), each having a small area, between an information display region (32) of the panel and the sealing agent forming portion (35).

2. An information display panel as claimed in claim 1, wherein all of or a part of the plural patterns (41 a-d) each having a small area are connected.

3. An information display panel as claimed in claim 1 or 2, wherein the patterns of the gap maintaining member (41) are integrated with partition wall patterns in the information display region (32).

4. An information display panel as claimed in claim 1 or 2, wherein the patterns each having a small area, which constitute the gap maintaining member (41), are formed by line-shaped patterns (41a), and the plural line-shaped patterns are aligned in the same direction to form the gap maintaining member.

5. An information display panel as claimed in claim 4, wherein a space width between lines of the line-shaped patterns (41a) is wider than a particle diameter of the display particles.

6. An information display panel as claimed in claim 4, wherein a line width of the line-shaped patterns (41 a) is 5 - 100 $\mu$m.

7. An information display panel as claimed in claim 4, wherein a line width of the line-shaped patterns (41a) is equal to a space between adjacent line-shaped patterns.

8. A method of manufacturing the information display panel (31) as claimed in claim 1, comprising a step that the gap maintaining member (41) is formed by using the same material as that of partition walls (4) in the information display region (32) of the panel and by forming simultaneously according to the same process as that of the partition walls in the information display region of the panel.

**Patentansprüche**

1. Informationsanzeigetafel (31), in der Anzeigepartikel (3) zwischen zwei gegenüberliegenden Substraten (1, 2) eingeschlossen sind, wobei zumindest ein Substrat (2) transparent ist, und in der bewirkt wird, dass die Anzeigepartikel, wenn eine elektrostatische Tafel angelegt wird, sich bewegen, um Information, wie etwa ein Bild, anzuzeigen, umfassend: ein Spalthalteteil (41) und einen Einschlussmittelausbildungsabschnitt (35), der in einem Umfangsabschnitt der Tafel angeordnet ist, **dadurch gekennzeichnet, dass** das Spalthalteteil (41) durch Anordnen mehrerer Muster (41a-d), die jeweils eine kleine Fläche haben, zwischen einem Informationsanzeigebereich (32) der Tafel und dem Einschlussmittelausbildungsabschnitt (35) ausgebildet ist.

2. Informationsanzeigetafel nach Anspruch 1, wobei alle oder ein Teil der mehreren Muster (41a-d), die jeweils eine kleine Fläche haben, verbunden sind.

3. Informationsanzeigetafel nach Anspruch 1 oder 2, wobei die Muster des Spalthalteteils (41) mit Trennwandmustern in dem Informationsanzeigebereich (32) integriert sind.

4. Informationsanzeigetafel nach Anspruch 1 oder 2, wobei die Muster, die jeweils eine kleine Fläche haben und die das Spalthalteteil (41) bilden, durch linienförmige Muster (41a) ausgebildet sind und die mehreren linienförmigen Muster in der gleichen Richtung ausgerichtet sind, um das Spalthalteteil auszubilden.

5. Informationsanzeigetafel nach Anspruch 4, wobei die Zwischenraumbreite zwischen Linien der linienförmigen Muster (41a) breiter ist als ein Partikeldurchmesser der Anzeigepartikel.

6. Informationsanzeigetafel nach Anspruch 4, wobei eine Linienbreite der linienförmigen Muster (41 a) 5 bis 100 $\mu$m beträgt.

7. Informationsanzeigetafel nach Anspruch 4, wobei eine Linienbreite der linienförmigen Muster (41a) gleich einem Zwischenraum zwischen benachbarten linienförmigen Mustern ist.

8. Verfahren zur Herstellung der Informationsanzeigetafel (31) nach Anspruch 1, umfassend einen Schritt, in dem das Spalthalteteil (41) unter Verwendung desselben Materials wie das der Trennwände (4) in dem Informationsanzeigebereich (32) der Tafel und unter gleichzeitiger Ausbildung gemäß demselben Prozess wie dem der Trennwände in dem Informationsanzeigebereich der Tafel ausgebildet wird.

**Revendications**

1. Panneau d'affichage d'informations (31), dans lequel des particules d'affichage (3) sont enfermées hermétiquement entre deux substrats (1, 2) opposés, au moins un substrat (2) étant transparent, et dans lequel les particules d'affichage, lorsqu'un champ électrostatique est appliqué, sont amenées à se déplacer de manière à afficher des informations telles qu'une image, comprenant : un élément de maintien d'espace (41) et une partie de formation d'agent d'étanchéité (35) agencée au niveau d'une partie périphérique du panneau, **caractérisé en ce que** l'élément de maintien d'espace (41) est formé en agençant plusieurs motifs (41a à d), chacun ayant une petite superficie, entre une région d'affichage d'informations (32) du panneau et la partie de formation d'agent d'étanchéité (35).

2. Panneau d'affichage d'informations selon la revendication 1, dans lequel la totalité ou une partie de la pluralité de motifs (41 à à d) ayant chacun une petite superficie sont connectés.

3. Panneau d'affichage d'informations selon la revendication 1 ou 2, dans lequel les motifs de l'élément de maintien d'espace (41) sont intégrés avec des motifs de parois de séparation dans la région d'affichage d'informations (32).

4. Panneau d'affichage d'informations selon la revendication 1 ou 2, dans lequel les motifs ayant chacun une petite superficie, qui constituent l'élément de maintien d'espace (41), sont formés par des motifs en forme de lignes (41a), et la pluralité de motifs en forme de lignes sont alignés dans la même direction pour former l'élément de maintien d'espace.

5. Panneau d'affichage d'informations selon la revendication 4, dans lequel une largeur d'espace entre les lignes des motifs en forme de lignes (41a) est plus grande qu'un diamètre de particule des particules d'affichage.

6. Panneau d'affichage d'informations selon la revendication 4, dans lequel une largeur de ligne des motifs en forme de lignes (41a) est de 5 à 100 $\mu$m.

7. Panneau d'affichage d'informations selon la revendication 4, dans lequel une largeur de ligne des motifs en forme de lignes (41a) est égale à un espace entre des motifs en forme de lignes adjacents.

8. Procédé de fabrication du panneau d'affichage d'informations (31) selon la revendication 1, comprenant une étape de formation de l'élément de maintien d'espace (41) en utilisant le même matériau que celui des parois de séparation (4) dans la région d'affichage d'informations (32) du panneau et en les formant simultanément selon le même processus que celui des parois de séparation dans la région d'affichage d'informations du panneau.

FIG. 1

EP 1 770 434 B1

# FIG. 2

(a)

(b)

13

# FIG. 3

(a)

(b)

# FIG. 4

(a)

(b)

(c)

(d)

EP 1 770 434 B1

# FIG. 5

(a)

22R  6    22G    2    22BL  3Wa

21-1      21-2      21-3

}3W
}3B

}3

4    1    5    3Ba

(b)

22R  6    22G    2    22BL  3Ba

21-1      21-2      21-3

}3B
}3W

}3

4    5    1    3Wa

# *FIG. 6*

# *FIG. 7*

EP 1 770 434 B1

## FIG. 8

Information display region
( partition wall forming portion .)

# FIG. 9

Line width
Space

21a
21a
} 21

# FIG. 10

(a)

41a

(b)

41b

(c)

41c

(d)

41d

(e)

51

41a

(f)

51

41b

(g)

51

52

41c

(h)

4

41a

Partition wall forming portion
in information display region

# *FIG. 11*

(a)

41a

a

3Ba

b          b

diameter "a">space "b"

(b)

41b

a

3Ba

b

diameter "a">space "b"

FIG. 12

Square cell grid arrangement

Square cell honeycomb arrangement 1

Circular cell grid arrangement

Line cell

honeycomb arrangement

Triangular cell grid arrangement

Circular cell honeycomb arrangement

Triangular cell honeycomb arrangement

Square cell mesh arrangement

Square cell honeycomb arrangement 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20040184137 A

**Non-patent literature cited in the description**

• Japan Hardcopy '99. *The Imaging Society of Japan,* 21 July 1999, 249-252